# EUROPEAN PATENT SPECIFICATION

(11) **EP 2 676 821 B1**
(45) Date of publication and mention of the grant of the patent: **17.12.2014**
(21) Application number: 13003054.7
(22) Date of filing: 14.06.2013
(51) Int. Cl.: B60G 9/00, B60G 21/05, B60G 11/28, B60B 35/06, B60B 35/10

(54) **Assembly set for the assembly of a wheelsuspension, wheelsuspension assembled by means of such an assembly set and method for assembling a wheelsuspension by use of such an assembly set**
Bausatz für das Zusammenbauen einer Radaufhängung, eine mit so einem Bausatz zusammengebaute Radaufhängung und Verfahren zum Zusammenbauen einer Radaufhängung mit so einem Bausatz
Jeu de pièces pour l'assemblage d'une suspension de roue, suspension de roue assemblée d'un tel jeu de pièces et procédé d'assemblage pour suspension de roue utilisant un tel jeu de pièces

(30) Priority: 18.06.2012 BE 201200406
(43) Date of publication of application: 25.12.2013
(73) Proprietor: Geusens, Tony, 8301 Knokke Heist (BE)
(72) Inventor: Geusens, Tony, 3960 Bree (BE)
(74) Representative: Donné, Eddy

(56) References cited:
- EP-A1- 1 625 955
- EP-A2- 1 564 036
- EP-A2- 1 572 476
- EP-A2- 1 842 700
- EP-A2- 2 397 340
- DE-A1- 10 140 856
- DE-A1- 19 818 698
- DE-B3- 10 231 376
- DE-B3- 10 231 377
- US-A- 2 989 133
- US-A- 3 709 516
- US-A- 4 533 157
- US-A1- 2011 001 350

## Description

The present invention first and foremost relates to an assembly set for assembling a wheel suspension for a pair of wheels of a vehicle.

Without limiting the invention to this, more specifically the present invention relates to an assembly set that is suitable for assembling a wheel suspension for a pair of wheels that are not driven, as is often the case with certain rear wheels of vehicles.

There are already many known ways to equip such vehicles with a pair of wheels or a number of pairs of wheels, whereby in many cases use is made of 'rigid' axles.

Such rigid axles are used in particular for rather heavily loaded wheels of vehicles, such as wheels for lorries, semitrailers, trailers, off-road vehicles, delivery trucks and similar, as such rigid axles are more suitable for absorbing heavy loads on account of their sturdy construction.

Typically such a rigid axle consists of a square or round tube that is connected to the vehicle chassis by means of suspension arms.

The suspension arms are generally suspended via a hinged connection from dumb irons that are provided on the chassis, and between the hinged suspension arms and the chassis there is also an elastic element, for example in the form of air bellows or steel springs or similar.

The connection between the axle and the suspension arms can be realised according to the state of the art by means of a welded joint as described in the patent DE 102.31.377, a clamp connection or by means of brackets or similar, of which an example is known from the patent DE 102.31.376.

Moreover a hub of a wheel is rotatably mounted on each end of such a rigid axle via a bearing, whereby a rim with tyre can be screwed onto this hub.

Furthermore a brake carrier is also provided on the axle, on which the brake claws of the brakes are mounted.

The distance between the centre lines of the suspension arms is called the suspension width when they carry the springs, while the distance between the flanges of the hubs is called the track width.

Another more important parameter that can change from case to case, is the ride height, whereby a change of the ride height may also require a change of the wheel suspension.

The ride height is defined as the vertical distance between the axis of the axle and the position where the elastic element acts on the chassis, and this position generally corresponds to the underside of longitudinal runners of the chassis or dumb irons on the chassis to which the wheel suspension is fastened.

A great difficulty for constructors of such wheel suspensions is that they must be able to offer a very wide range of different wheel suspensions.

Indeed, a change of the maximum load that the wheel suspension must be able to take, a change of the distance between the suspension arms carrying the springs or thus the suspension width, a change of the ride height or a change of the distance between the wheels or thus the track width, in most cases also means a change of the entire wheel suspension, for example because the axle length has to be adjusted accordingly or the axle has to be made thicker and/or from a stronger material and similar.

Indeed, depending on the type of vehicle there are many different track widths and suspension widths.

Typical track widths for single wheel assembly in Europe are: 1880, 2010, 2040, 2090, 2095 and 2140 mm.

Moreover, for double tyre assembly there are track widths of 1790 and 1810 mm, while there is also a track width of 1965 mm for the "super single" tyre size.

Thus in total in Europe there are at least 9 different sizes for the track width, which of course relates directly to the length of the axle used for the wheel suspension.

For single wheel assembly the following suspension widths are usual: 1160, 1200, 1250, 1300 and 1400 mm, while for double wheel assembly a spring width of 980 mm is used, and for the "super single" tyre size suspension widths of 1125 and 1225 mm.

In total there are thus at least 8 different suspension widths.

The ride height is between 210 mm and 420 mm.

In order to be able to realise different ride heights, according to the known construction methods the form of the dumb irons is adjusted, the curved form (swan neck) of the suspension arms is changed and/or the air bellows itself is changed.

In theory all the aforementioned sizes can be combined, which would lead to approx. 150 different wheel suspensions (9 different track widths, times 8 different suspension widths, times 2 ride heights).

In practice however there are around 75 different standard types of wheel suspension in use for the same maximum load.

In Europe, for example, the following three important maximum loads are usual, i.e. 9 tonnes, 10 tonnes and 12 tonnes.

On the North American and South American continent, maximum loads of 14, 15 and 20 tonnes are standard.

It is clear that a change of the maximum load also requires a change of the axle, for example a change of the tube thickness or the type of steel used.

In brief, manufacturers must be able to easily offer a very wide range of types of wheel suspensions, if they are to satisfy the market requirements.

As a result, for the three different maximum loads taken together 27 different types of axles are required, irrespective of the final configuration of the wheel suspension (with regard to suspension width, track width and/or ride height) in which the axle is used.

An important factor that influences the wall thickness of the axle to be used is the torque that occurs on the axle under certain aggravating conditions.

Such an aggravating condition with regard to the occurrence of torque can, for example, be the one-sided springing in and out of one of the wheels of the wheel suspension, which can happen for example when one of the wheels of the wheel suspension drives over an irregularity in the road surface.

Another aggravating condition that is coupled with a high torque on the axle can for example be a situation in which the elastic element on one side of the wheel suspension compresses while the elastic element on the other side of the wheel suspension extends simultaneous.

Such a situation typically occurs when driving around a bend, whereby the vehicle leans over to one side under the effect of the centrifugal force.

Another aggravating condition whereby a high torque is generated on the axle occurs when braking.

For an axle with a maximum load of 9 tonnes, the braking torque is around 19,000 Nm.

For an axle with a maximum load of 10 tonnes, the braking torque is 21,250 Nm, which is 12% more, and for an axle with a maximum load of 12 tonnes the braking torque is approximately 25,500 Nm, which is 35% more than 19,000 Nm.

On the basis of these values of the braking torque and for a certain imposed external diameter of the axle, it can be calculated that for a 9 tonne axle a wall thickness of the least 10 mm must be used, for a 10 tonne axle a wall thickness of at least 15 mm, and for a 12 tonne axle a wall thickness of at least 21 mm.

It will be understood that in order to realise greater maximum loads very heavy axles have to be used in order to be able to accommodate the braking torque that occurs, which will substantially increase the cost of such axles and moreover make the vehicle itself heavier.

All these additional changes mean an important additional production cost and make the work of a constructor of wheel suspensions anything but easy.

DE 102.31.377 for example describes that for the realisation of a wheel suspension with a standard variant track width, the constructor of wheel suspensions can take a longer or shorter central axle or alternatively longer or shorter axle heads or longer or shorter connecting elements for the suspension arms, in order to assemble the wheel suspension by welding the components together, for example by friction welding. Consequently, the constructor of wheel suspensions requires a large stock of different sizes of these components and suitable personnel and tools for welding these components together. To weld the components together a small axial overlap is provided between the central axle and connecting elements for the suspension arms, but this overlap is chosen to be as small as possible and cannot be adjusted to adapt the track width.

For the vehicle constructor too, the existing situation is not easy as, depending on his order book, he must order different wheel suspensions as a function of the vehicles to be built. This means that the vehicle constructor has the choice to have a large number of ready-to-use wheel suspensions in stock in order to respond flexibly to the incoming orders, or he must tolerate a long delivery period for his customers if he only has limited possibilities or no possibilities to have an advance stock of ready-to- use axles.

DE 102.31.376 describes an axle suspension whereby the suspension supports can be moved axially to a limited extent, which gives somewhat greater flexibility, but which is insufficient to drastically reduce the stocks of ready-to-use wheel suspensions.

The purpose of the invention is to provide a solution to one or more of the aforementioned and any other disadvantages.

More specifically the purpose of the invention is first and foremost to provide a simple and cheap solution for the manufacture of many types of wheel suspensions, whereby it is also an aim to make these wheel suspensions as light as possible, as well as to increase the stability of vehicles equipped with such wheel suspensions.

To this end the invention concerns an assembly set for assembling a wheel suspension for a pair of wheels of a vehicle with a desired track width, suspension width and/or ride height of the wheel suspension concerned, and this assembly set at least comprises the following components for manufacturing a multitude of wheel suspensions with a variety of track widths, suspensions widths and/or ride heights:
- a central axle that is essentially formed by a tube;
- a pair of axle heads that are each intended to affix a wheel hub of one of the wheels on it;
- a pair of suspension arms, that are each intended to be fastened in a hinged way to a chassis of the vehicle in order to fasten the wheel suspension in a hinged way to the chassis of the vehicle;
- a pair of suspension supports that are intended to support a spring between the wheel suspension and the chassis; and,
- a pair of connecting elements that are intended to connect the central axle, the pair of axle heads, the pair of suspension arms and the pair of suspension supports together;
whereby to assemble a wheel suspension with the assembly set, each connecting element must be mounted between or over one of the ends of the central axle and one of the axle heads in the direction along the axle of the wheel suspension, and between or over one of the suspension arms and one of the suspension supports in a direction transverse to the axle of the wheel suspension, whereby during assembly of the separate components, these components are positioned in different positions with respect to one other such that the desired track width, suspension width and/or ride height is realised.

A great advantage of such an assembly set according to the invention is that only a few standard components are needed to be able to manufacture a multitude of wheel suspensions with a variety of track widths, suspension widths and/or ride heights.

More specifically according to the invention it is sufficient, at least insofar the connecting elements and suspension arms are constructed completely symmetrically, to have only one type of central axle, one type of axle head, one type of suspension arm, and one type of suspension support in order to manufacture many different types of wheel suspensions, however always with the same specific maximum load, but without having to use different components.

Indeed, by ensuring that a suspension arm and a suspension support can be affixed with an adjustable length and/or height on each connecting element, and by ensuring that the central axle, as well as an axle head can move axially in each connecting element, it is possible to adjust the track width, suspension width, as well as the ride height of the wheel suspension, so that an entire range of wheel suspensions with highly diverse characteristics can be assembled with a very limited number of components.

By further making the suspension arm and suspension support sufficiently sturdy, so that they are suitable for all required maximum loads, and ensuring that a connecting element can be combined with any type of central axle and axle head, irrespective of the maximum load for which this central axle and axle head are intended, the number of different components required can also be limited by expanding the range of wheel suspensions to wheel suspensions that can differ with regard to their track width, suspension width, ride height and maximum load.

For the three different maximum loads that are usual in Europe this means that according to the invention it is sufficient to have one type of suspension arm, one type of suspension support, one type of connecting element, each of a universal type, three different types of axle each with the same length, but with a different wall thickness corresponding to the required maximum load, and three different types of axle heads, also adapted according to the required maximum load.

In total according to the invention it is thus sufficient to have nine different components for the realisation of all possible wheel suspensions with varying track width, suspension width, ride height and maximum load.

It is clear that with such an assembly set according to the invention, the manufacture of wheel suspensions can be greatly simplified, such that the cost of such wheel suspensions can also be limited.

Moreover for an entire series of wheel suspensions, the same components are always required, such that these components can be manufactured in larger runs than was previously the case with known construction methods, which also helps bring the cost down.

According to a preferred embodiment of an assembly set according to the invention, the assembly set is also provided with a bearing to rotatably support the central axle in one of the connecting elements.

Additionally an assembly set according to the invention is preferably provided with suspension arms in the form of an elongated body, whereby both ends of such a suspension arm are axially rotatable with respect to one another.

The present invention also relates to a wheel suspension assembled using an assembly set according to the invention as described above, whereby the wheel suspension comprises an interjacent section that consists of a central axle, whereby each end of the central axle is affixed in a first bushing in a connecting element, whereby an axle head is affixed in a second bushing in the connecting element concerned on either side of the interjacent section, whereby these axle heads are securely mounted in the connecting elements and whereby a suspension arm and a suspension support are provided on opposite sides of each connecting element.

A big advantage of such a wheel suspension according to the invention is of course that it can easily be assembled, whatever the required track width, suspension width or ride height.

According to a preferred embodiment of a wheel suspension according to the invention the central axle is mounted rotatably with respect to the axle direction in at least one of the connecting elements, for example by means of an aforementioned bearing of the assembly set.

For a wheel suspension according to the invention both ends of each suspension arm are also preferably axially rotatable with respect one another.

A great advantage of these embodiments of a wheel suspension according to the invention is that the stresses that occur in such a wheel suspension are efficiently limited, compared to wheel suspensions assembled without the central axle being rotatably mounted in the connecting element concerned at one end, or without a suspension arm being constructed with ends rotatable with respect to one another.

This also has direct positive consequences on the quantity of material or type of material required for manufacturing the components of the wheel suspension.

Indeed, as already set out above, the required wall thickness to manufacture the central axle or the suspension arms is primarily determined by a number of aggravating conditions that relate to the maximum torque occurring in these components, such as for example the torque that occurs if one of the wheels of the wheel suspension springs in and out on one side, or which occurs if the elastic element on one side of the wheel suspension compresses while the elastic element on the other side of the wheel suspension extends simultaneously.

Practice, as well as calculations, have shown that it is primarily these torsional stresses that give rise to metal fatigue in the suspension arms, and in the dumb irons from which these suspension arms are suspended, resulting in the initiation of tears and breakage.

Calculations have also shown that the load of an axle of a semitrailer for example as a result of bending is very low, certainly compared to the load as a result of torsion.

By allowing a number of freedoms of rotation in the wheel suspension, as presented according to the said preferred embodiments of a wheel suspension according to the invention, no torques are generated in the suspension arms or the central axle, so that these components can be made much lighter.

This means that for the same required maximum load of the wheel suspension, the central axle can have a much smaller wall thickness if account only has to be taken of the fact that the axle must not bend too far under the load, as is the case with the present invention, than when account also has to be taken of the fact that the axle must not twist too much under the influence of the uneven springing in or out of the wheels for example, as is the case with known wheel suspensions.

Consequently with a wheel suspension according to the invention, for the same required maximum load the central axle can be made much lighter than with the known wheel suspensions, which is an important advantage both on a technical and economic level.

With known wheel suspensions, the central axle and axle heads form a fixed set, while according to the invention the central axle can preferably move somewhat independently with respect to the axle heads due to the rotatable mounting of one of the ends of the central axle in a connecting element.

As a result, in a wheel suspension according to the invention the central axle can be affixed lower between the two connecting elements in a simple way.

Thus more space occurs between the central axle and the chassis of the vehicle, such that for certain types of vehicles, in particular tanker trailers and tipper trailers, the superstructure of the vehicle can be lowered.

In this way a greater load capacity can be created, and the centre of gravity of the vehicle can also be lowered, which fosters safety.

According to a preferred embodiment of a wheel suspension according to the invention, the central axle can also be affixed lower between the two axle heads, which provides the advantage that the ride height can be greatly limited so that the centre of gravity is lowered and the load volume can be increased within the existing standards in this respect.

This is in sharp contrast to known construction methods whereby a rigid axle is provided with a central lowered section, as is the case for example in patent No. US 7.401.490, and whereby the entire axle must be deformed into an axle with a U-shaped central section for example, which requires extremely complex and expensive techniques.

The present invention further relates to a method for assembling a wheel suspension for a pair of wheels of a vehicle, and this method consists of assembling components of an assembly set according to the invention as described above, and whereby at least the following steps are performed:
- the mounting of a central axle at each of its ends in a connecting element to form an interjacent section;
- the mounting an axle head on either side of the interjacent section in each of the connecting elements;
- the adjustment of the axial distance between the connecting elements by a suitable axial displacement of the ends of the central axle in the connecting element concerned;
- the adjustment of the track width by a suitable axial displacement of the axle heads in the connecting element concerned;
- the fixing of the central axle, the connecting elements and the axle heads axially with respect one another;
- the fixed mounting of a suspension support on each connecting element, whereby the axial position of each suspension support on the connecting element is adjusted according to the desired suspension width, and whereby each suspension support is mounted at a certain height on the connecting element according to the desired ride height; and,
- the fixed mounting of a suspension arm opposite each suspension support on the connecting element concerned, whereby a mutual distance is respected according to the distance between sections of the chassis of the vehicle to which the wheel suspension must be fastened.

It is clear that this method according to the invention enables a wide range of different wheel suspensions to be realised with very few different components, whereby the number of different components required that a constructor always has to have in stock is greatly reduced and the actions that have to be done to manufacture the different types of wheel suspensions are kept to a minimum.

With the intention of better showing the characteristics of the invention, a preferred embodiment of an assembly set according to the invention, as well as a wheel suspension according to the invention whereby use is made of such an assembly set, are described hereinafter by way of an example, without any limiting nature, with reference to the accompanying drawings, wherein:
- figure 1 shows a perspective view of a known wheel suspension of a semitrailer;
- figure 2 shows a top view according to arrow F2 of a section of the known wheel suspension of figure 1;
- figure 3 shows a side view of another known wheel suspension according to arrow F3 of figure 1, whereby a spring is affixed directly above the axle;
- figure 4 shows a perspective view of an assembly set according to the invention for assembling a wheel suspension according to the invention;
- figure 5 shows a front view of the assembly set of figure 4 according to the arrow F5;
- figure 6 shows a perspective view of a wheel suspension according to the invention, assembled on the basis of the assembly set of figure 4;
- figure 7 shows a top view of the section, indicated by F7, of the wheel suspension of figure 6 adjacent to one of the wheels; and,
- figure 8 shows an enlarged side view of the wheel suspension of figure 6 according to arrow F8.

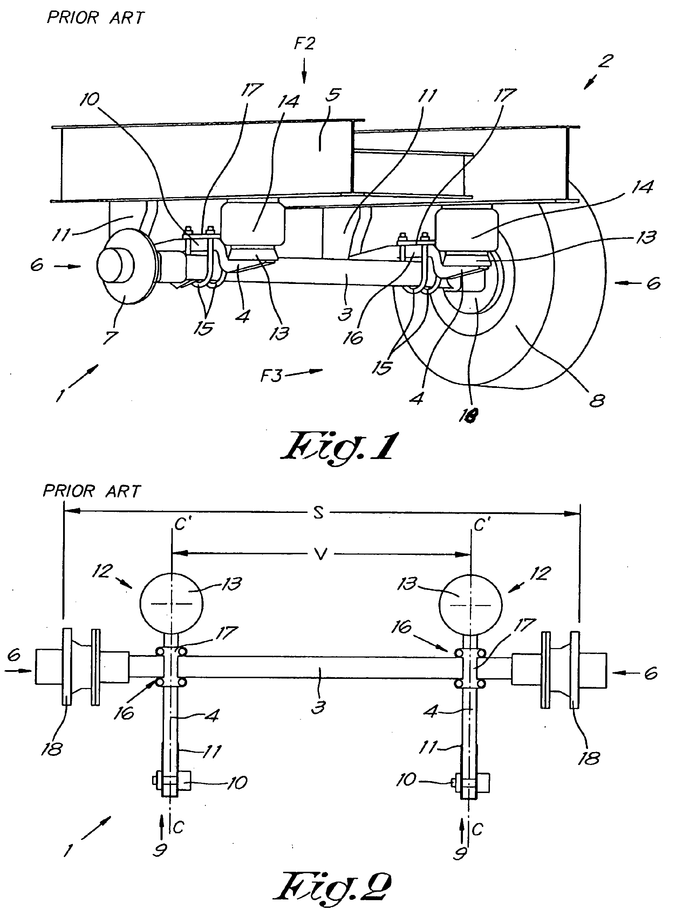

The known wheel suspension 1 of a semitrailer 2 shown in figures 1 to 3 is a wheel suspension 1 with a rigid axle 3, that is hingeably mounted by means of suspension arms 4 on a chassis 5 of the semitrailer 2.

In this case the axle 3 is a tube with circular cross-section, but in practice it is often constructed with a square cross-section or a cross-section of a different shape.

A bearing is provided at each end 6 of the rigid axle 3, and these bearings are not shown in the drawings, around which a hub 7 of a wheel 8 is mounted.

The suspension arms 4 are each mounted at one end 9 on a dumb iron 11 via a hinged connection 10, while the other end 12 is provided with a supporting section 13 to support the air bellows 14 that forces the axle 3 away from the chassis 5.

In this case the fastening of the suspension arms 4 to the axle 3 is realised by U-shaped brackets 15 that are affixed around the axle 3 and around the central section 16 of the suspension arms 4 and whose ends are bolted securely with respect to a bracket plate 17, but equally well the suspension arms 4 according to the known construction methods of wheel suspensions 1 with a rigid axle 3 are welded, or similar, directly to the axle 3.

The hinged connection 10 by which the axle 3 is connected to the chassis 5 via suspension arms 4 enables a rotation of the axle 3 around an axis parallel to the axle 3 of the wheel suspension 1 and generally also movements that slightly deviate from it.

In principle this means that in the event of one of the wheels 8 of the wheel suspension 1 springing in or out, the other wheel 8 is also automatically strongly influenced.

The axle 3, as well as the suspension arms 4, are highly torsionally loaded in the event of such unequal springing in or out of the wheels 8, with considerable torsional stresses in these components as a result.

This is one of the reasons why the axle 3 generally has a large wall thickness.

This operating condition that the axle 3 must satisfy, places a stricter requirement on the axle 3 than the condition that the bending load on the axle 3 must not lead to too great a bending deformation, for example.

Consequently with known wheel suspensions 1 a large wall thickness must be used for the axle 3, which is detrimental to the weight as well as its cost.

On the other hand it is clear that such known wheel suspensions 1 with a rigid axle 3 are very robust and are thus suitable for vehicles that are heavily loaded, such as lorries, semitrailers 2 and similar.

Figure 2 shows that the distance V between the centre lines CC' of the suspension arms carrying the air bellows is called the suspension width V, and that the distance S between the flanges 18 of the hubs 7 is called the track width S.

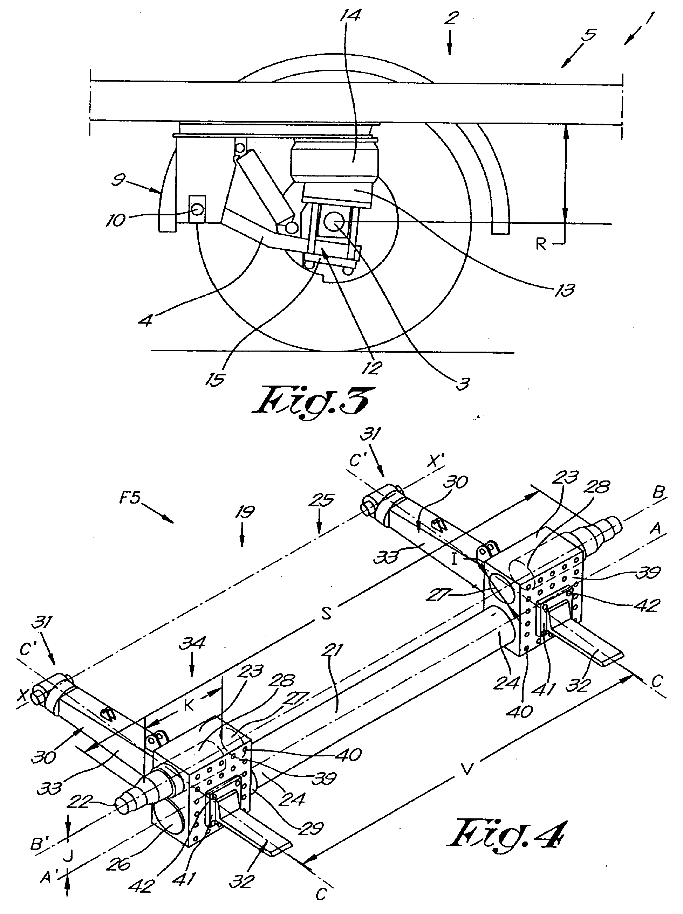

Furthermore, figure 3 indicates the ride height R, which is the vertical distance R between the centre of the axle 3 and the position on the chassis 5 on which the elastic element of the wheel suspension 1 acts, which in this case is formed by the air bellows 14.

It is clear that a change of the required maximum load of the wheel suspension 1, a change of the track width S, a change of the ride height R and, depending on the connection method between the suspension arms 4 and the axle 3, also a change of the suspension width V, is generally coupled with an entirely new design of the wheel suspension 1, such that the constructors must have very many components, tools and similar.

Moreover every known type of wheel suspension 1 is different such that the manufacture itself can only be standardised or automated to a limited extent, if at all.

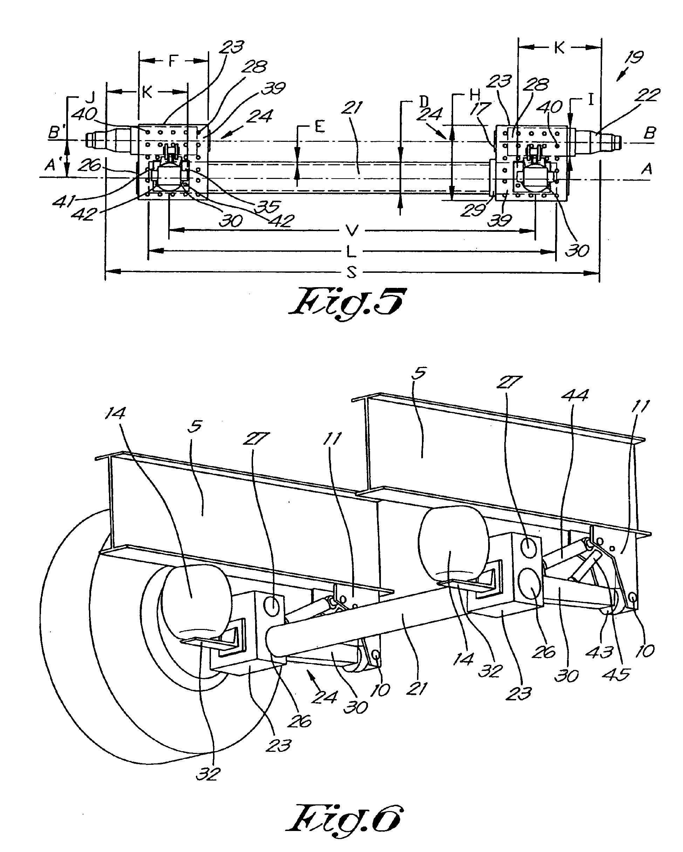

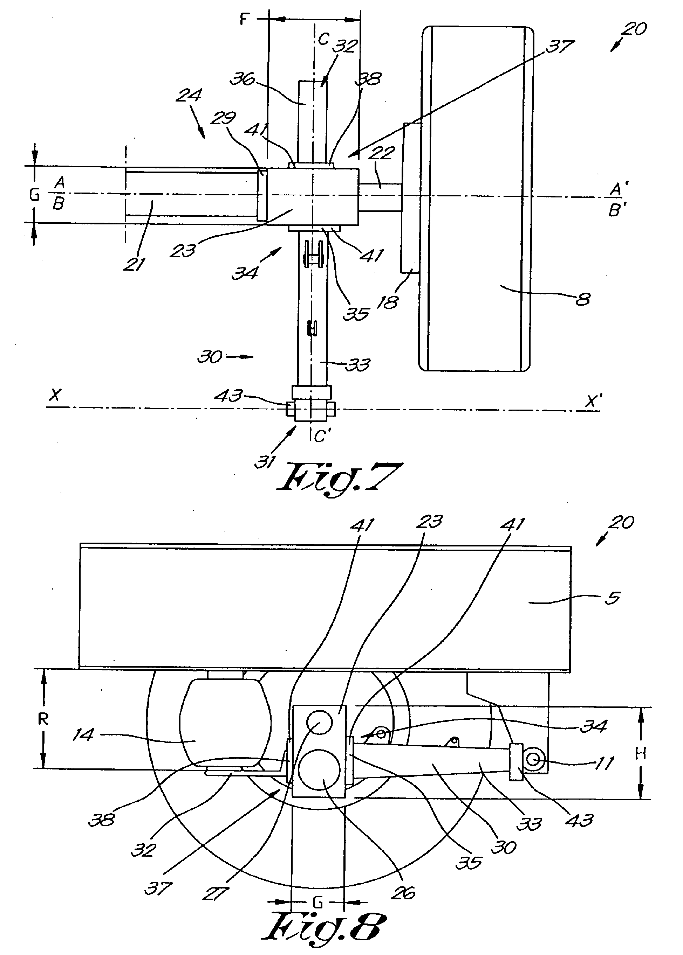

Figures 4 and 5 show an assembly set 19 according to the invention for assembling a wheel suspension 20 according to the invention, of which different views are shown in figures 6 to 8.

In this case the assembly set 19 shown comprises a minimum number of components with which different wheel suspensions 20 with varying track widths S, suspension widths V or ride heights R can be assembled.

To this end the assembly set 19 is first and foremost provided with a central axle 21, which in this embodiment is essentially formed by a hollow cylindrical tube 21 with a length L, and external diameter D and a wall thickness E.

Furthermore, the assembly set 19 is provided with a pair of separate axle heads 22, which form an axle end 22 for affixing a wheel hub, not shown in figure 4, whereby after assembly these axle heads 22 extend by a limited length K from the flange of the affixed wheel hub 7.

In this case, the axle heads 22 are also cylindrical in a stepped construction.

In another embodiment, however, it is not excluded constructing the central axle 21 differently, for example with a non-circular cross-section or a non-hollow cross-section or similar.

The assembly set 19 comprises at least a pair of such axle heads 22 that are preferably identical to one another.

Furthermore an assembly set 19 according to the invention is provided with a pair of connecting elements 23 that are intended to connect separate components of the assembly set 19 together.

In the embodiment shown these connecting elements 23 are constructed as beam-shaped elements 23 with a length F, width G and a height H.

To form a wheel suspension 20 with the assembly set 19 the central axle 21 must first be fitted by each of its two ends 24 in a connecting element 23 to form an interjacent section 25.

Then on either side of the interjacent section 25 an axle head 22 can be fitted in each of the connecting elements 24.

In brief, it is the intention that each connecting element 23 is fitted with its length F between an axle head 22 and an end 24 of the central axle 21.

In order to enable such an assembly, in the example of the drawings the connecting elements 23 are first and foremost provided with a first bushing 26 that extends along the longitudinal direction F of the connecting element concerned, whereby an end 24 of the central axle 21 can be affixed in the first bushing 26 such that each end 24 of the central axle 21 can move axially in the first bushing 26.

To this end in this case such a first bushing 26 is cylindrical with an internal diameter D that matches the external diameter D of the central axle 21.

Moreover, the connecting elements 23 are provided with a second bushing 27 that also extends along the longitudinal direction F of the connecting element concerned and in which an end 28 of an axle head 22 can be affixed, and such that the end 28 of the axle head 22 can move axially in the second bushing 27.

To this end in this case such a second bushing 26 is cylindrical with an internal diameter I that matches the external diameter I of an end 28 of an axle head 22.

The first bushing 26 and second bushing 27 can be constructed as a borehole in the connecting elements 23 or as a separate lining that is fastened in a borehole.

A great advantage of such an embodiment of an assembly set 19 according to the invention is that when assembling a wheel suspension 20 with such an assembly set 19, the track width S of the wheel suspension 20 can be easily adjusted.

This can be done by, on the one hand, adjusting the distance between the connecting elements 23 via an axial movement of the central axle 21 in the first bushing 26 concerned in the connecting elements 23, and, on the other hand, by moving the axle heads 22 axially in the second bushing 27 concerned in the connecting elements 23.

In the example of the drawings, the first bushing 26 for an end 24 of the central axle 21 and the second bushing 27 for an axle head 22 present a certain lateral offset J, so that after fitting a pair of axle heads 22 and the central axle 21 on a pair of connecting elements 23, the axial direction AA' of the central axle 21 and the axial direction BB' of the pair of axle heads 22 are staggered by a certain amount J according to the aforementioned offset J.

A first advantage of this configuration is that a wheel suspension 20 with a lowered central axle 21 can be realised in a very simple way by just ensuring that in the assembled state the central axle 21 extends between the connecting elements 23 at a distance J below the axle heads 2, according to the aforementioned lateral offset J.

This configuration with first bushings 26 and second bushings 27 that present a certain lateral offset J, also has the advantage that the ends 24 of the central axle 21 and the ends 28 of the axle heads 22 can be moved axially over quite a large range in the connecting elements 23, as with a sufficiently large lateral offset J the respective ends 24 and 28 can pass along each other.

On the other hand it is not excluded according to the invention to construct the first bushing 26 for an end 24 of the central axle 21 and the second bushing 27 for an axle head 22 such that they extend in line with one another, and if desired the first bushing 26 and the second bushing 27 can even be constructed as two ends of the same bushing, for example a bushing with a constant internal diameter D, which matches both the external diameter D of the central axle 21 and the external diameter I of an axle head 22, or on the other hand as a single bushing with an internal diameter that is staggered.

After setting the desired track width S, by suitable axial movements of the central axle 21 and the axle heads 22 in the connecting elements 23, it is then of course the intention that the central axle 21, the connecting elements 23 and axle heads 22 are fixed axially with respect one another.

This can simply be done for example by welding these different components together or by other joining techniques, for example by means of screws that can be used more easily without specific tools or skilled workers being required, such that for example a vehicle manufacturer does not necessarily have to order a suitable ready-made wheel suspension from an axle constructor for every vehicle, but alternatively, based on an assembly set according to the invention, a suitable wheel suspension can be easily assembled in his workshop for every vehicle to be built. According to a preferred embodiment of a wheel suspension 20 according to the invention, however, preferably at least one end 24 of the central axle 21 is rotatably supported in the corresponding connecting element 23, which leads to the advantage stated in the introduction that no torsional stresses are induced in the central axle 21 by the uneven springing in of the wheels 8.

This can be realised for example by using a bearing 29 of the assembly set 19, as is also the case in the example of the drawings, at least at one end 24 of the central axle 21.

Another aspect of an assembly set 19 according to the invention is that it is equipped with a pair of suspension arms 30, which, just like the known wheel suspensions 1, are each intended to be fastened by one end 31 in a hinged way to a chassis 5 of a vehicle 2 in order to be able fit the central axle 3 elastically with respect to the chassis 5, but the suspension arms 30 of an assembly set 19 according to the invention are constructed completely differently.

An important difference with the suspension arms of the known wheel suspensions 1 is that they are not provided with a supporting section 13 to support a spring or air bellows 14 or similar between the wheel suspension 20 and the chassis 5, but with an assembly set 19 according to the invention a separate pair of suspension supports 32 is provided to this end.

As a result, to assemble a wheel suspension 20 with an assembly set 19 according to the invention, it is the intention that each connecting element 23, on the one hand, is mounted in the direction AA' along the central axle 21 of the wheel suspension 20 between one of the ends 24 of the central axle 21 and one of the axle heads 22, and on the other hand mounted in a direction CC' transverse to the central axle 21 of the wheel suspension 20 between one of the suspension arms 30 and one of the suspension supports 32.

In brief, to form a wheel suspension 20 with an assembly set 19 according to the invention, each connecting element 23 must be fitted with its width G between a suspension arm 30 and a suspension support 32.

In the example shown in the drawings the suspension arms 30 are essentially formed by an elongated body 33 with fastening means 35 at one end 34 to fasten the suspension arm 30 concerned to a connecting element 23 and at the other end 31 a hinged part for connecting the suspension arm 30 in a hinged way, by means of a dumb iron 11, to a chassis 5 of a vehicle for a rotation around an axial direction XX' that extends transversely on the elongated body 33.

The suspension supports 32 are essentially formed by a flat elongated body 36 that is provided at one end 37 with fastening means 38 to fasten the suspension support 32 concerned to a connecting element 23.

The flat elongated body 36 itself hereby acts as a support surface to support a spring element or air bellows 14 or similar of the wheel suspension 20.

According to a preferred embodiment of an assembly set 19 according to the invention, and as is also the case in the case of the drawings, the position for fastening the suspension arms 30 and the suspension supports 32 on the connecting elements 23 can be adjusted.

To this end in this case each connecting element 23 is essentially beam shaped, whereby two opposite sidewalls 39 of a connecting element 23 are each provided with a flat pattern of holes 40, and these holes 40 are intended for fastening a suspension arm 30 and a suspension support 32 to either side of the connecting element 23.

The fastening means 35 respectively 38 for securely but adjustably fastening a suspension arm 30 or a suspension support 32 respectively, to a connecting element 23 are also formed in the example shown by a base plate 41 on the elongated body 33 or 36 respectively, in which holes 42 are provided in a connecting element 23 at a distance that is a multiple of the distance between successive holes 40, and this of course with the intention to be able to stepwise adjustably fasten the suspension arm 30 or suspension support 32 respectively to the connecting element 23 by using bolts or similar.

More generally it can be said that an assembly set 19 according to the invention can preferably be such that the suspension supports 32 can be adjustably affixed to a connecting element 23 along the longitudinal direction F of the connecting element 23, or in other words according to the axial direction AA' of the central axle 23, so that when assembling a wheel suspension 20 with such an assembly set 19 the distance V between the suspension supports 32, which corresponds to the suspension width, is adjustable, on the one hand by adjusting the distance between the connecting elements 23 by an axial movement of the central axle 21 in the first bushing 26 concerned in the connecting elements 23 and, on the other hand, by adjusting along the longitudinal direction F of each suspension support 32 on the connecting piece 23 concerned.

Another preferred aspect of an assembly set 19 according to the invention is that it ensures that the connecting elements have a certain height H and that the suspension supports 32 can be affixed adjustably in height H to a connecting element 23, so that when assembling a wheel suspension 20 with such an assembly set the height between the suspension supports 32 and the central axle 21, and this height affects the ride height, is adjustable.

It is also preferably the case, as is also the case in the drawings shown, that the suspension arms 30 of an assembly set 19 according to the invention are adjustable along the height H of a connecting element 23, which also affects the ride height R, and/or that the suspension arms 30 can be affixed adjustably along the length F of a connecting element 23, which then has an effect on the mutual distance that can be realised on the chassis 5 to fasten the wheel suspension 20, such as the distance between dumb irons 11 or similar for example.

It is clear that as a result of all the aforementioned facilities a wheel suspension 20 assembled with an assembly set 19 according to the invention is built up from a larger number of components than is generally case with known wheel suspensions 1, but the assembled components of an assembly set 19 according to the invention are well chosen such that with a minimum of components a maximum of different wheel suspensions 20 can be realised with highly divergent track widths S, suspension widths V and/or ride heights R, and without many difficulties for assembling such divergent wheel suspensions 20.

For ease of assembly and with the intention of keeping the number of components of an assembly set 19 according to the invention as low as possible, preferably the two axle heads 22 of the pair of axle heads 22, the two suspension arms 30 of the pair of suspension arms 30, the two suspension supports 32 of the pair of suspension supports 32 and the two connecting elements 23 of the pair of connecting elements 23, intended for a certain wheel suspension 20, are constructed identically each time for each pair of corresponding components.

Preferably according to the invention the suspension arms 30, the suspension supports 32 and the connecting elements 23 also present a certain symmetry.

Another aspect of the invention is that for assembling wheel suspensions 20 for different tonnages, the assembly set 19 is preferably provided with different central axles 21 in the form of a hollow tube 21, each with the same length L and external diameter D, but with a different wall thickness E, whereby such an assembly set 19 is nonetheless provided with only one type of connecting element 23 that can be combined with the different central wheel axles 21.

An assembly set 19 that is suitable for example for assembling three types of wheel suspensions 20, according to a tonnage of 9, 10 and 12 tonnes, can for example be put together such that a central axle 21 with a wall thickness E of typically 6 mm, 7 mm and 9 mm respectively can be used.

Of course other tonnages and other wall thicknesses E used for the central axles 21 according to the invention are not excluded.

Moreover, attention is also drawn to an aspect of an assembly set 19 according to the invention that is extremely useful for keeping the dimensions of its components limited, and consequently also the weight of these components.

It is the case that a suspension arm 30 of an assembly set 19 according to the invention has an elongated body 33 whereby the two ends 31 and 34 of the suspension arm 30 are axially rotatable with respect to one another around the axial direction CC', for example because the suspension arm 30 is constructed as two parts with a bearing 43 between these parts that enable the aforementioned rotation.

A great advantage of this embodiment is that no torsional stresses can occur in the suspension arms 30, for example as a result of the uneven springing in or out of the wheels 8 of the wheel suspension 20, which turns out to be one of the severest load conditions on the wheel suspension according to practical experience, as well as according to calculations.

As shown in more detail in figure 6, a very compact suspension can be obtained with an assembly set 19, whereby a shock absorber 44 and a hydraulic stabiliser 45 can easily be mounted on that chassis between each suspension arm 30 and the chassis 5 or a suspension rack 11.

Thus a multitude of wheel suspensions 20 can be very efficiently assembled that are nonetheless compact and equipped with the most advanced damping means.

The present invention is by no means limited to the embodiments of an assembly set 19 or a wheel suspension 20 according to the invention described as an example and shown in the drawings, but an assembly set 19 or a wheel suspension 20 according to the invention can be realised in all kinds of variants, without departing from the scope of the invention.

The present invention is also not limited to the method according to the invention for assembling a wheel suspension 20 on the basis of an assembly set 19 according to the invention described as an example, but according to the invention alternative methods can also be applied just as well for this purpose.

## Claims

1. Assembly set (19) for assembling a wheel suspension (20) for a pair of wheels (8) of a vehicle with a desired track width, suspension width and/or ride height of the wheel suspension concerned, **characterised in that** the assembly set (19) at least comprises the following components for manufacturing a multitude of wheel suspensions with a variety of track widths, suspension widths and/or ride heights:
- a central axle (21) that is essentially formed by a tube;
- a pair of axle heads (22) that are each intended to affix a wheel hub (7) of one of the wheels (8) on it;
- a pair of suspension arms (30), that are each intended to be fastened in a hinged way to a chassis (5) of the vehicle in order to fasten the wheel suspension (20) in a hinged way to the chassis (5) of the vehicle;
- a pair of suspension supports (32) that are intended to support a spring (14) between the wheel suspension (20) and the chassis (5); and,
- a pair of connecting elements (23) that are intended to connect the central axle (21), the pair of axle heads (22), the pair of suspension arms (30) and the pair of suspension supports (32) together;
whereby an aforementioned central axle (21), an axle head (22), a suspension arm (30) and a suspension support (32) can be fitted to a connecting element (23) independently of one another, whereby to assemble a wheel suspension (20) with the assembly set (19), each connecting element (23) must be mounted between or over one of the ends (24) of the central axle (21) and one of the axle heads (22) in the direction (AA') along the central axle (21) of the wheel suspension (20), and between or over one of the suspension arms (30) and one of the suspension supports (32) in a direction (CC') transverse to the central axle (21) of the wheel suspension (20), whereby during assembly of the wheel suspension, the separate components are such that they enable these components to be positioned in different positions with respect to one other such that a wheel suspension with the desired track width and/or suspension width and/or ride height can be realised.

2. Assembly set (19) according to claim 1, **characterised in that** the connecting elements (23) for affixing an end (24) of the central axle (21) are provided with a first bushing (26) that extends along the longitudinal direction (F) of the connecting element (23) concerned, and in which an end (24) of the central axle (21) can be affixed so that it can move axially.

3. Assembly set (19) according to any one of the previous claims, **characterised in that** the connecting elements (23) for affixing an axle head (22) are provided with a second bushing (27) that extends along the longitudinal direction (F) of the connecting element (23) concerned, and in which an axle head (22) can be affixed so that it can move axially.

4. Assembly set (19) according to claims 2 and 3, **characterised in that** when assembling a wheel suspension (20) with such an assembly set (19) its track width (S) can be adjusted, by, on the one hand, adjusting the distance between the connecting elements (23) via an axial movement of the central axle (21) in the first bushing (26) concerned in the connecting elements (23), and by, on the other hand, moving the axle heads (22) axially in the second bushing (27) concerned in the connecting elements (23).

5. Assembly set (19) according to any one of the claims 2 to 4, **characterised in that** the first bushing (26) for an end (24) of the central axle (21) and the second bushing (27) for an axle head (22) present a certain lateral offset (J), so that after fitting a pair of axle heads (22) and the central axle (21) on a pair of connecting elements (23), the axial direction (AA') of the central axle (21) and the axial direction (BB') of the pair of axle heads (22) are staggered by a certain amount (J) according to the aforementioned offset (J), in order to be able to mount the central axle (21) lower than the two wheel heads (22) for example, in the assembled and mounted state of the wheel suspension on a vehicle.

6. Assembly set (19) according to one or more of the previous claims, **characterised in that** it is also provided with a bearing (29) to rotatably support the central axle (21) in one of the connecting elements (23) with respect to the axle direction (AA').

7. Assembly set (19) according to one or more of the previous claims, **characterised in that** each connecting element (23) has a width (G) and that, to form a wheel suspension (20) with the assembly set (19), the width (G) of each connecting element (23) has to be fitted between a suspension arm (30) and a suspension support (32).

8. Assembly set (19) according to one or more of the previous claims, **characterised in that** the suspension supports (32) can be affixed adjustably on a connecting element (23) along the longitudinal direction (F) of the connecting element (23) parallel to the axial direction (AA') of the central axle, so that when assembling a wheel suspension (20) with such an assembly set (19) the distance (V) between the suspension supports (32), which corresponds to the suspension width (V), can be adjusted, on the one hand by adjusting the distance between the connecting elements (23) by an axial movement of the central axle (21) in the first bushing (26) concerned in the connecting elements (23) and/or, on the other hand by adjusting along the longitudinal direction (F) of a connecting element (23) of each suspension support on the connecting element (23) concerned.

9. Assembly set (19) according to one or more of the previous claims, **characterised in that** the connecting elements (19) have a height (H) and that the suspension supports (32) can be affixed adjustably along the height (H) on a connecting element (19), so that when assembling a wheel suspension (20) with such an assembly set (19) the height between the suspension supports (32) and the central axle (21) is adjustable, and this height affects the ride height (R).

10. Assembly set (19) according to one or more of the previous claims, **characterised in that** the connecting elements (23) have a height (H) and a length (F) and that the suspension arms (30) can be affixed adjustably along the height (H) and the length (F) on a connecting element (23).

11. Assembly set (19) according to one or more of the previous claims, **characterised in that** each connecting element (23) is essentially beam shaped whereby two opposite sidewalls (39) of a connecting element (23) are each provided with a flat pattern of holes (40) intended for fastening a suspension arm (30) and a suspension support (32) on either side of the connecting element (23).

12. Assembly set (19) according to claim 11, **characterised in that** the fastening means (35,38) for the fixed, but adjustable, fastening of a suspension arm (30) or a suspension support (32) to a connecting element (23) are formed by a baseplate (41) in which holes (42) are provided at a distance that is a multiple of the distance between successive holes (40) in a connecting element (23) with the intention to be able to fasten the suspension arm (30) orsuspension support (32) to the connecting element (23) with bolts in a way that is stepwise adjustable.

13. Assembly set (19) according to one or more of the previous claims, **characterised in that** a suspension arm (30) has an elongated body (33) whereby the two ends (31,34) of the suspension arm (30) are axially rotatable with respect to one another.

14. Assembly set (19) according to any one of the previous claims, **characterised in that**, in order to assemble wheel suspensions (20) for different tonnages, the assembly set (19) is provided with different central axles (21) in the form of a hollow tube, each with the same length (L) and external diameter (D), but with a different wall thickness (E), but with only one type of connecting element (23) that can be combined with the different central axles (21).

15. Assembly set (19) according to claim 14, **characterised in that** it is suitable for assembling three types of wheel suspensions (20), according to a tonnage of 9, 10 and 12 tonnes, whereby a central axle (21) is used with a wall thickness (E) of 6 mm, 7 mm and 9 mm respectively.

16. Method for assembling a wheel suspension (20) for a pair of wheels (8) of a vehicle, **characterised in that** it consists of assembling components of an assembly set(19) according to one of the claims 1 to 15, whereby at least the following steps are performed:
- the mounting of a central axle (21) at each of its two ends (24) in a connecting element (23) to form an interjacent section (25);
- the mounting an axle head (22) on either side of the interjacent section (25) in each of the connecting elements (23);
- the adjustment of the axial distance between the connecting elements (23) by a suitable axial displacement of the ends (24) of the central axle (21) in the connecting element (23) concerned;
- the adjustment of the track width (S) by a suitable axial displacement of the axle heads (22) in the connecting element (23) concerned;
- the fixing of the central axle (21), the connecting elements (23) and the axle heads (22) axially with respect one another;
- the fixed mounting of a suspension support (32) on each connecting element (23), whereby the axial position of each suspension support (32) on the connecting element (23) is adjusted according to the desired suspension width (V), and whereby each suspension support (32) is mounted at a certain height on the connecting element (23) according to the desired ride height (R); and,
- the fixed mounting of a suspension arm (32) opposite each suspension support (32) on the connecting element (23) concerned, whereby a mutual distance is respected according to the distance between sections of the chassis (5) of the vehicle to which the wheel suspension (20) must be fastened.

## Patentansprüche

1. Bausatz (19) zum Zusammenstellen einer Radaufhängung (20) für ein Paar von Rädern (8) eines Fahrzeugs mit einer gewünschten Spurbreite, Aufhängungsbreite und/oder Fahrhöhe der betreffenden Radaufhängung, **dadurch gekennzeichnet, dass** der Bausatz (19) mindestens die folgenden Komponenten zur Herstellung einer Vielzahl von Radaufhängungen mit einer Verschiedenheit an Spurbreiten, Aufhängungsbreiten und/oder Fahrhöhen umfasst:
- eine zentrale Achse (21), die im Wesentlichen durch ein Rohr gebildet wird;
- ein Paar von Achsköpfen (22), die jeder zum daran Befestigen einer Radnabe (7) eines der Räder (8) bestimmt sind;
- ein Paar von Aufhängungsarmen (30), die jeder dazu bestimmt sind, scharnierbeweglich an einem Chassis (5) des Fahrzeugs befestigt zu werden, um die Radaufhängung (20) scharnierbeweglich am Chassis (5) des Fahrzeugs zu befestigen;
- ein Paar von Aufhängungsstützen (32), die zum Unterstützen einer Feder (14) zwischen der Radaufhängung (20) und dem Chassis (5) bestimmt sind; und
- ein Paar von Verbindungselementen (23), die zum Miteinanderverbinden der zentralen Achse (21), des Paars von Achsköpfen (22), des Paars von Aufhängungsarmen (30) und des Paars von Aufhängungsstützen (32) bestimmt sind;
wobei eine vorgenannte zentrale Achse (21), ein Achskopf (22), ein Aufhängungsarm (30) und eine Aufhängungsstütze (32) unabhängig voneinander an einem Verbindungselement (23) montiert werden können, wobei zum Zusammenstellen einer Radaufhängung (20) mit dem Bausatz (19) jedes Verbindungselement (23) zwischen oder über einem der Enden (24) der zentralen Achse (21) und einem der Achsköpfe (22) in der Richtung (AA') entlang der zentralen Achse (21) der Radaufhängung (20), und zwischen einem oder über einem der Aufhängungsarme (30) und einer der Aufhängungsstützen (32) in einer Richtung (CC') quer zur zentralen Achse (21) der Radaufhängung (20) zu montieren ist, wobei während des Zusammenbaus der Radaufhängung die separaten Komponenten so sind, dass sie ein Positionieren dieser Komponenten in verschiedenen Positionen in Bezug zueinander gestatten, sodass eine Radaufhängung mit der gewünschten Spurbreite und/oder Aufhängungsbreite und/oder Fahrhöhe verwirklicht werden kann.

2. Bausatz (19) nach Anspruch 1, **dadurch gekennzeichnet, dass** die Verbindungselemente (23) zum Befestigen eines Endes (24) der zentralen Achse (21) mit einer ersten Buchse (26) versehen sind, die sich gemäß der Längsrichtung (F) des betreffenden Verbindungselements (23) erstreckt, und worin ein Ende (24) der zentralen Achse (21) befestigt werden kann, sodass es axial bewegbar ist.

3. Bausatz (19) nach einem der vorgenannten Ansprüche, **dadurch gekennzeichnet, dass** die Verbindungselemente (23) zum Befestigen eines Achskopfs (22) mit einer zweiten Buchse (27) versehen sind, die sich gemäß der Längsrichtung (F) des betreffenden Verbindungselements (23) erstreckt, und worin ein Achskopf (22) befestigt werden kann, sodass er axial bewegbar ist.

4. Bausatz (19) nach Ansprüchen 2 und 3, **dadurch gekennzeichnet, dass**, beim Zusammenstellen einer Radaufhängung (20) mit einem solchen Bausatz (19) deren Spurbreite (S) eingestellt werden kann, einerseits durch Einstellen des Abstandes zwischen den Verbindungselementen (23) mittels einer axialen Bewegung der zentralen Achse (21) in der betreffenden ersten Buchse (26) in den Verbindungselementen (23), und andererseits durch axiales Bewegen der Achsköpfe (22) in der betreffenden zweiten Buchse (27) in den Verbindungselementen (23).

5. Bausatz (19) nach einem der Ansprüche 2 bis 4, **dadurch gekennzeichnet, dass** die erste Buchse (26) für ein Ende (24) der zentralen Achse (21) und die zweite Buchse (27) für einen Achskopf (22) einen gewissen seitlichen Versatz (J) aufweisen, sodass nach der Montage eines Paars von Achsköpfen (22) und der zentralen Achse (21) an einem Paar von Verbindungselementen (23) die axiale Richtung (AA') der zentralen Achse (21) und die axiale Richtung (BB') des Paars von Achsköpfen (22) um einen gewissen Betrag (J) entsprechend dem vorgenannten Versatz (J) versetzt sind, sodass, im zusammengestellten und montierten Zustand der Radaufhängung an einem Fahrzeug, beispielsweise die zentrale Achse (21) niedriger als die zwei Radachsköpfe (22) montiert werden kann.

6. Bausatz (19) nach einem oder mehreren der vorgenannten Ansprüche, **dadurch gekennzeichnet, dass** er auch mit einem Lager (29) zum rotierbaren Unterstützen der zentralen Achse (21) in einem der Verbindungselemente (23) in Bezug zur Achsrichtung (AA') versehen ist.

7. Bausatz (19) nach einem oder mehreren der vorgenannten Ansprüche, **dadurch gekennzeichnet, dass** jedes Verbindungselement (23) eine Breite (G) aufweist und dass zur Bildung einer Radaufhängung (20) mit dem Bausatz (19) die Breite (G) jedes Verbindungselements (23) zwischen einem Aufhängungsarm (30) und einer Aufhängungsstütze (32) montiert werden muss.

8. Bausatz (19) nach einem oder mehreren der vorgenannten Ansprüche, **dadurch gekennzeichnet, dass** die Aufhängungsstützen (32) verstellbar an einem Verbindungselement (23) gemäß der Längsrichtung (F) des Verbindungselements (23) parallel zur axialen Richtung (AA') der zentralen Achse angebracht werden können, sodass beim Zusammenstellen einer Radaufhängung (20) mit einem solchen Bausatz (19) der Abstand (V) zwischen den Aufhängungsstützen (32), welcher der Aufhängungsbreite (V) entspricht, eingestellt werden kann, einerseits durch Einstellen des Abstands zwischen den Verbindungselementen (23) durch eine axiale Bewegung der zentralen Achse (21) in der betreffenden ersten Buchse (26) in den Verbindungselementen (23) und/oder andererseits durch gemäß der Längsrichtung (F) eines Verbindungselements (23) Einstellen jeder Aufhängungsstütze an dem betreffenden Verbindungselement (23).

9. Bausatz (19) nach einem oder mehreren der vorgenannten Ansprüche, **dadurch gekennzeichnet, dass** die Verbindungselemente (19) eine Höhe (H) aufweisen und dass die Aufhängungsstützen (32) verstellbar gemäß der Höhe (H) an einem Verbindungselement (19) angebracht werden können, sodass beim Zusammenstellen einer Radaufhängung (20) mit einem solchen Bausatz (19) die Höhe zwischen den Aufhängungsstützen (32) und der zentralen Achse (21) einstellbar ist und diese Höhe die Fahrhöhe (R) beeinflusst.

10. Bausatz (19) nach einem oder mehreren der vorgenannten Ansprüche, **dadurch gekennzeichnet, dass** die Verbindungselemente (23) eine Höhe (H) und eine Länge (F) aufweisen und dass die Aufhängungsarme (30) verstellbar gemäß der Höhe (H) und der Länge (F) an einem Verbindungselement (23) angebracht werden können.

11. Bausatz (19) nach einem oder mehreren der vorgenannten Ansprüche, **dadurch gekennzeichnet, dass** jedes Verbindungselement (23) im Wesentlichen balkenförmig ist, wobei zwei gegenüberliegende Seitenwände (39) eines Verbindungselements (23) jede mit einem flachen Muster mit Löchern (40), zur Befestigung eines Aufhängungsarms (30) und einer Aufhängungsstütze (32) an beiden Seiten des Verbindungselements (23) bestimmt, versehen sind.

12. Bausatz (19) nach Anspruch 11, **dadurch gekennzeichnet, dass** die Befestigungsmittel (35, 38) zum fest, jedoch verstellbar Befestigen eines Aufhängungsarms (30) oder einer Aufhängungsstütze (32) an einem Verbindungselement (23) durch eine Grundplatte (41) gebildet sind, worin Löcher (42) in einem Abstand vorgesehen sind, der ein Vielfaches des Abstandes zwischen aufeinanderfolgenden Löchern (40) in einem Verbindungselement (23) beträgt, mit der Absicht, den Aufhängungsarm (30) oder die Aufhängungsstütze (32) mittels Bolzen schrittweise verstellbar an dem Verbindungselement (23) befestigen zu können.

13. Bausatz (19) nach einem oder mehreren der vorgenannten Ansprüche, **dadurch gekennzeichnet, dass** ein Aufhängungsarm (30) einen länglichen Körper (33) aufweist, wobei die beiden Enden (31, 34) des Aufhängungsarms (30) in Bezug zueinander axial rotierbar sind.

14. Bausatz (19) nach einem der vorgenannten Ansprüche, **dadurch gekennzeichnet, dass**, zum Zusammenstellen von Radaufhängungen (20) für verschiedene Tonnagen, der Bausatz (19) mit verschiedenen zentralen Achsen (21) in Form eines hohlen Rohrs versehen ist, jedes mit derselben Länge (L) und Außendurchmesser (D), jedoch mit unterschiedlicher Wanddicke (E), jedoch mit nur einem Typ von Verbindungselement (23), das mit den verschiedenen zentralen Achsen (21) kombiniert werden kann.

15. Bausatz (19) nach Anspruch 14, **dadurch gekennzeichnet, dass** er zum Zusammenstellen von drei Typen von Radaufhängungen (20) geeignet ist, gemäß einer Tonnage von 9, 10 und 12 Tonnen, wobei eine zentrale Achse (21) mit einer Wanddicke (E) von 6 mm, 7 mm beziehungsweise 9 mm verwendet wird.

16. Verfahren zum Zusammenstellen einer Radaufhängung (20) für ein Paar von Rädern (8) eines Fahrzeugs, **dadurch gekennzeichnet, dass** es aus dem Zusammenfügen von Komponenten eines Bausatzes (19) nach einem der Ansprüche 1 bis 15 besteht, wobei mindestens die folgenden Schritte durchgeführt werden:
- das Montieren einer zentralen Achse (21) an jedem ihrer zwei Enden (24) an einem Verbindungselement (23), um ein zwischenliegendes Teil (25) zu bilden;
- das Montieren eines Achskopfs (22) an beiden Seiten des zwischenliegenden Teils (25) in jedem der Verbindungselemente (23);
- das Einstellen des axialen Abstandes zwischen den Verbindungselementen (23) durch eine geeignete axiale Verschiebung der Enden (24) der zentralen Achse (21) in dem betreffenden Verbindungselement (23);
- das Einstellen der Spurbreite (S) durch eine geeignete axiale Verschiebung der Achsköpfe (22) in dem betreffenden Verbindungselement (23);
- das in Bezug zueinander axial Befestigen der zentralen Achse (21), der Verbindungselemente (23) und der Achsköpfe (22);
- die feste Montage einer Aufhängungsstütze (32) an jedem Verbindungselement (23), wobei die axiale Position jeder Aufhängungsstütze (32) an dem Verbindungselement (23) gemäß der gewünschten Aufhängungsbreite (V) eingestellt wird und wobei jede Aufhängungsstütze (32) gemäß der gewünschten Fahrhöhe (R) auf einer bestimmten Höhe an dem Verbindungselement (23) montiert wird; und
- die feste Montage eines Aufhängungsarms (32) gegenüber jeder Aufhängungsstütze (32) an dem betreffenden Verbindungselement (23), wobei gemäß dem Abstand zwischen Teilen des Chassis (5) des Fahrzeugs, woran die Radaufhängung (20) zu befestigen ist, ein gegenseitiger Abstand respektiert wird.

## Revendications

1. Jeu d'assemblage (19) pour l'assemblage d'une suspension de roue (20) pour une paire de roues (8) d'un véhicule avec une voie, une largeur de suspension et/ou une hauteur de conduite désirées de la suspension de roue concernée, **caractérisé en ce que** le jeu d'assemblage (19) comprend au moins les composants suivants pour la fabrication d'une multitude de suspensions de roues avec une variété de voies, de largeurs de suspension et/ou de hauteurs de conduite :
- un essieu central (21) qui est essentiellement réalisé par un tube ;
- une paire de têtes d'essieux (22) qui sont chacune destinées à fixer un moyeu de roue (7) d'une des roues (8) à ces têtes d'essieux ;
- une paire de bras de suspension (30) qui sont chacun destinés à être fixés d'une manière articulée à un châssis (5) du véhicule afin de fixer la suspension de roue (20) d'une manière articulée au châssis (5) du véhicule ;
- une paire de supports de suspension (30) qui sont destinés à supporter un ressort (14) entre la suspension de roue et le châssis (5) ; et
- une paire d'éléments de liaison (23) qui sont destinés à relier les uns aux autres l'essieu central (21), la paire de têtes d'essieux (22), la paire de bras de suspension (30) et la paire de supports de suspension (32) ;
par lequel un essieu central susmentionné (21), une tête d'essieu (22), un bras de suspension (30) et un support de suspension (32) peuvent être montés sur un élément de liaison (23), de manière réciproquement indépendante ; par lequel, pour assembler une suspension de roue (20) avec le jeu d'assemblage (19), chaque élément de liaison (23) doit être monté entre ou par-dessus une des extrémités (24) de l'essieu central (21) et une des têtes d'essieux (22) dans la direction (AA') le long de l'essieu central (21) de la suspension de roue (20) et entre ou par-dessus un des bras de suspension (30) et un des supports de suspension (32) dans une direction (CC') transversale par rapport à l'essieu central (21) de la suspension de roue (20) ; par lequel, au cours de l'assemblage de la suspension de roue, les composants séparés sont tels qu'ils permettent à ces composants de se positionner dans différentes positions les uns par rapport aux autres, de telle sorte que l'on peut obtenir une suspension de roue avec la voie et/ou la largeur de suspension et/ou la hauteur de conduite désirées.

2. Jeu d'assemblage (19) selon la revendication 1, **caractérisé en ce que** les éléments de liaison (23) pour la fixation d'une extrémité (24) de l'essieu central (21) sont munis d'une première douille (26) qui s'étend dans la direction longitudinale (F) de l'élément de liaison (23) concerné, et dans lequel une extrémité (24) de l'essieu central (21) peut être fixée de façon à pouvoir se déplacer en direction axiale.

3. Jeu d'assemblage (19) selon l'une quelconque des revendications précédentes, **caractérisé en ce que** les éléments de liaison (23) pour la fixation d'une tête d'essieu (22) sont munis d'une deuxième douille (27) qui s'étend dans la direction longitudinale (F) de l'élément de liaison (23) concerné, et dans lequel une tête d'essieu (22) peut être fixée de façon à pouvoir se déplacer en direction axiale.

4. Jeu d'assemblage (19) selon les revendications 2 et 3, **caractérisé en ce que**, au cours de l'assemblage d'une suspension de roue (20) avec un tel jeu d'assemblage (19), sa voie (S) peut être réglée, d'une part en réglant la distance s'étendant entre les éléments de liaison (23) à l'aide d'un mouvement axial de l'essieu central (21) dans la première douille (26) concernée dans les éléments de liaison (23), et d'autre part en déplaçant les têtes d'essieux (22) en direction axiale dans la deuxième douille (27) concernée dans les éléments de liaison (23).

5. Jeu d'assemblage (19) selon l'une quelconque des revendications 2 à 4, **caractérisé en ce que** la première douille (26) pour une extrémité (24) de l'essieu central (21) et la deuxième douille (27) pour une tête d'essieu (22), présentent un certain décalage latéral (J), si bien qu'après le montage d'une paire de têtes d'essieux (22) et de l'essieu central (21) sur une paire d'éléments de liaison (23), la direction axiale (AA') de l'essieu central (21) et la direction axiale (BB') de la paire de têtes d'essieux (22) sont décalées d'une certaine valeur (J) conformément au décalage susmentionné (J), afin de pouvoir monter l'essieu central (21) plus bas que les deux têtes d'essieux (22) par exemple, à l'état assemblé et monté de la suspension de roue sur un véhicule.

6. Jeu d'assemblage (19) selon une ou plusieurs des revendications précédentes, **caractérisé en ce qu'**il est également muni d'un palier (29) pour supporter en rotation l'essieu central (21) dans un des éléments de liaison (23) par rapport à la direction axiale (AA').

7. Jeu d'assemblage (19) selon une ou plusieurs des revendications précédentes, **caractérisé en ce que** chaque élément de liaison (23) possède une largeur (G), et **en ce que**, pour obtenir une suspension de roue (20) avec le jeu d'assemblage (19), la largeur (G) de chaque élément de liaison (23) doit être comprise entre un bras de suspension (30) et un support de suspension (32).

8. Jeu d'assemblage (19) selon une ou plusieurs des revendications précédentes, **caractérisé en ce que** les supports de suspension (32) peuvent être fixés en ajustage sur un élément de liaison (23) dans la direction longitudinale (F) de l'élément de liaison (23) parallèlement à la direction axiale (AA') de l'essieu central, si bien que, au cours de l'assemblage d'une suspension de roue (20) avec un tel jeu d'assemblage (19), on peut régler une distance (V), entre les supports de suspension (32), qui correspond à la largeur de suspension (S), d'une part en réglant la distance s'étendant entre les éléments de liaison (23) à l'aide d'un mouvement axial de l'essieu central (21) dans la première douille (26) concernée dans les éléments de liaison (23) et/ou d'autre part à l'aide d'un réglage dans la direction longitudinale (F) d'un élément de liaison (23) de chaque support de suspension sur l'élément de liaison (23) concerné.

9. Jeu d'assemblage (19) selon une ou plusieurs des revendications précédentes, **caractérisé en ce que** les éléments de liaison (23) possèdent une hauteur (H), et **en ce que** les supports de suspension (32) peuvent être fixés de manière réglable le long de la hauteur (H) sur un élément de liaison (32), de telle sorte que, au cours de l'assemblage d'une suspension de roue (20) avec un tel jeu d'assemblage (19), on peut régler la hauteur entre les supports de suspension (32) et l'essieu central (21), et cette hauteur affecte la hauteur de conduite (R).

10. Jeu d'assemblage (19) selon une ou plusieurs des revendications précédentes, **caractérisé en ce que** les éléments de liaison (23) possèdent une hauteur (H) et une longueur (F), et **en ce que** les bras de suspension (30) peuvent être fixés de manière réglable le long de la hauteur (H) et de la longueur (F) sur un élément de liaison (23).

11. Jeu d'assemblage (19) selon une ou plusieurs des revendications précédentes, **caractérisé en ce que** chaque élément de liaison (23) possède essentiellement la configuration d'une poutre, par lequel deux parois latérales opposées (39) d'un élément de liaison (23) sont chacune munies d'un motif plat de trous (40) destinés à la fixation d'un bras de suspension (30) et d'un support de suspension (32) de chaque côté de l'élément de liaison (23).

12. Jeu d'assemblage (19) selon la revendication 11, **caractérisé en ce que** les moyens de fixation (35, 38) pour la fixation fixe, mais réglable, d'un bras de suspension (30) ou d'un support de suspension (32) à un élément de liaison (23), sont réalisés à l'aide d'une plaque de base (41) dans laquelle on prévoit des trous (42) à une distance qui représente un multiple de la distance s'étendant entre des trous successifs (40) dans un élément de liaison (23) dans l'intention de pouvoir fixer le bras de suspension (30) ou le support de suspension (32) à l'élément de liaison (23) avec des boulons d'une manière qui permet un réglage progressif.

13. Jeu d'assemblage (19) selon une ou plusieurs des revendications précédentes, **caractérisé en ce qu'**un bras de suspension (30) possède un corps allongé (33), par lequel les deux extrémités (31, 34) du bras de suspension (30) sont rotatives en direction axiale l'une par rapport à l'autre.

14. Jeu d'assemblage (19) selon une ou plusieurs des revendications précédentes, **caractérisé en ce que**, pour assembler des suspensions de roues (20) pour différents tonnages, le jeu d'assemblage (19) est équipé de différents essieux centraux (21) sous la forme d'un tube creux, possédant chacun la même longueur (L) et le même diamètre externe (D), mais une épaisseur de paroi (E) différente, seulement un type d'élément de liaison (23) pouvant néanmoins être combiné avec les différents essieux centraux (21).

15. Jeu d'assemblage (19) selon la revendication 14, **caractérisé en ce qu'**il est approprié pour l'assemblage de trois types de suspensions de roues (20), conformément à un tonnage de 9, 10 et 12 tonnes, par lequel on utilise un essieu central (21) possédant une épaisseur de paroi (E) de 6 mm, de 7 mm et de 9 mm, respectivement.

16. Procédé pour assembler une suspension de roue (20) pour une paire de roues (8) d'un véhicule, **caractérisé en ce qu'**il consiste à assembler des composants d'un jeu d'assemblage (19) selon l'une quelconque des revendications 1 à 15, par lequel on met en oeuvre au moins les étapes suivantes :
- le montage d'un essieu central (21) à chacune de ses deux extrémités (24) dans un élément de liaison (23) pour former un tronçon interjacent (25) ;
- le montage d'une tête d'essieu (22) de chaque côté du tronçon interjacent (25) dans chacun des éléments de liaison (23) ;
- le réglage de la distance axiale entre les éléments de liaison (23) à l'aide d'un déplacement axial approprié des extrémités (24) de l'essieu central (21) dans l'élément de liaison (23) concerné ;
- le réglage de la voie (S) à l'aide d'un déplacement axial approprié des têtes d'essieux (22) dans l'élément de liaison (23) concerné ;
- la fixation de l'essieu central (21), des éléments de liaison (23) et des têtes d'essieux (22) en direction axiale les uns par rapport aux autres ;
- le montage fixe d'un support de suspension (32) sur chaque élément de liaison (23), par lequel on règle la position axiale de chaque support de suspension (32) sur l'élément de liaison (23) en fonction de la largeur de suspension désirée (V), et par lequel chaque support de suspension (32) est monté à une certaine hauteur sur l'élément de liaison (23) en fonction de la hauteur de conduite désirée (R) ; et
- le montage fixe d'un bras de suspension (32) à l'opposé de chaque support de suspension (32) sur l'élément de liaison (23) concerné, par lequel on respecte une distance réciproque en fonction de la distance s'étendant entre des tronçons du châssis (5) du véhicule auquel la suspension de roue (20) doit être fixée.
